(19) Europäisches Patentamt
European Patent Office
Office européen des brevets

(11) Veröffentlichungsnummer: **0 517 707 B1**

## EUROPÄISCHE PATENTSCHRIFT

(45) Veröffentlichungstag der Patentschrift: **20.07.94**

(51) Int. Cl.5: **B05D 7/16**, C09D 175/04

(21) Anmeldenummer: **91902387.9**

(22) Anmeldetag: **21.01.91**

(86) Internationale Anmeldenummer:
**PCT/EP91/00110**

(87) Internationale Veröffentlichungsnummer:
**WO 91/12899 (05.09.91 91/21)**

(54) **VERFAHREN ZUR LACKIERUNG VON FAHRZEUGKAROSSERIEN UND WÄSSRIGE LACKE.**

(30) Priorität: **26.02.90 DE 4005961**

(43) Veröffentlichungstag der Anmeldung:
**16.12.92 Patentblatt 92/51**

(45) Bekanntmachung des Hinweises auf die
Patenterteilung:
**20.07.94 Patentblatt 94/29**

(84) Benannte Vertragsstaaten:
**AT BE CH DE DK ES FR GB IT LI NL SE**

(56) Entgegenhaltungen:
EP-A- 0 089 497    EP-A- 0 278 394
EP-A- 0 299 148    EP-A- 0 330 139
EP-A- 0 339 433    WO-A-90/01041
DE-A- 3 828 157

(73) Patentinhaber: **BASF Lacke + Farben AG**
**Glasuritstrasse 1**
**D-48165 Münster-Hiltrup(DE)**

(72) Erfinder: **WEGNER, Egon, Dr.**
**Eickenbecker Strasse 53**
**D-4406 Drensteinfurt 3(DE)**
Erfinder: **POTH, Ulrich**
**Albachtener Strasse 97 d**
**D-4400 Münster(DE)**
Erfinder: **GROSS, Lutz-Werner, Dr.**
**Josef Paris Strasse 6**
**D-4358 Haltern(DE)**
Erfinder: **WEIDEMEIER, Klaus**
**Liebigweg 9a**
**D-4400 Münster(DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

EP 0 517 707 B1

**Beschreibung**

Die Erfindung betrifft ein Verfahren zur Lackierung von Fahrzeug-, insbesondere Automobilkarosserien, bei dem

(1) ein Elektrotauchlack appliziert und eingebrannt wird

(2) gegebenenfalls ein Steinschlagzwischengrund appliziert und separat oder zusammen mit der in Stufe (3) aufgebrachten Füllerschicht eingebrannt wird

(3) ein Füller appliziert und eingebrannt wird und

(4) eine ein- oder mehrschichtige Decklackierung appliziert und eingebrannt wird,

wobei als Steinschlagzwischengrund und/oder Füller ein wäßriger Einbrennlack eingesetzt wird, der als Bindemittel eine Kombination aus

(A) einem wasserverdünnbaren Polyurethanharz

(B) einem wasserverdünnbaren Polyesterharz und

(C) einem Aminoplastharz enthält, wobei die Komponente (A) eine Säurezahl von 10 bis 60 und ein zahlenmittleres Molekulargewicht von 4000 bis 25.000 aufweist und herstellbar ist, indem

(a) ein Polyester- und/oder Polyetherpolyol mit einem zahlenmittleren Molekulargewicht von 400 bis 5000 oder ein Gemisch aus solchen Polyester- und/oder Polyetherpolyolen

(b) ein Polyisocyanat, oder ein Gemisch aus Polyisocyanaten

(c) eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und gegebenenfalls

(d) eine Hydroxyl- und/oder Aminogruppen enthaltende organische Verbindung mit einem Molekulargewicht von 40 bis 400 oder ein Gemisch aus solchen Verbindungen

miteinander umgesetzt werden und das entstandene Reaktionsprodukt wenigstens teilweise neutralisiert wird.

Die Erfindung betrifft auch einen wäßrigen Lack.

Das oben beschriebene Lackierverfahren ist dem Fachmann gut bekannt. Die Füllerschicht hat insbesondere die Aufgabe, Unebenheiten auszufüllen und abzudecken, um den Untergrund für den nachfolgenden Decklack zu egalisieren. Je besser diese Ausfüllung und Abdeckung von Unebenheiten des Untergrundes ist, desto besser ist die optische Qualität der Gesamtlackierung. Neben der optischen Qualität sind auch wichtige mechanisch-technologische Eigenschaften der Gesamtlackierung, wie z.B. Korrosionsschutz und vor allem die Resistenz gegen Steinschlag und andere mechanische Angriffe ganz entscheidend von der Qualität der Füllerschicht und - falls vorhanden - Steinschlagzwischengrundschicht abhängig.

Bislang werden ganz überwiegend Einbrennlacke auf Basis organischer Lösemittel zur Herstellung der Füller- und Steinschlagzwischengrundschichten eingesetzt.

Die Lackindustrie ist aus ökonomischen und ökologischen Gründen bestrebt, Lacke auf Basis organischer Lösemittel durch wäßrige Lacke zu ersetzen.

Der Erfindung liegt die Aufgabe zugrunde, wäßrige Lacke bereitzustellen, die geeignet sind, in dem oben beschriebenen Verfahren zur Herstellung von Füller- bzw. Steinschlagzwischengrundschichten verwendet zu werden.

Diese Aufgabe wird erfindungsgemäß gelöst durch Bereitstellung von wäßrigen Lacken, die als Bindemittel eine Kombination aus

(A) einem wasserverdünnbaren Polyurethanharz

(B) einem wasserverdünnbaren Polyesterharz und

(C) einem Aminoplastharz

enthalten, wobei die Komponente (A) eine Säurezahl von 10 bis 60 und ein zahlenmittleres Molekulargewicht von 4000 bis 25.000 aufweist und herstellbar ist, indem

(a) ein Polyester- und/oder Polyetherpolyol mit einem zahlenmittleren Molekulargewicht von 400 bis 5000 oder ein Gemisch aus solchen Polyester- und/oder Polyetherpolyolen

(b) ein Polyisocyanat, oder ein Gemisch aus Polyisocyanaten

(c) eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und gegebenenfalls

(d) eine Hydroxyl- und/oder Aminogruppen enthaltende organische Verbindung mit einem Molekulargewicht von 40 bis 400 oder ein Gemisch aus solchen Verbindungen

miteinander umgesetzt werden und das entstandene Reaktionsprodukt wenigstens teilweise neutralisiert wird, und die dadurch gekennzeichnet sind, daß die Komponente (A) in einer Menge von 40 bis 70 Gew.-%, die Komponente (B) in einer Menge von 15 bis 40 Gew.-% und die Komponente (C) in einer Menge von 8 bis 35 Gew.-% eingesetzt werden, wobei die Gewichtsprozentangaben auf (A) + (B) + (C) = 100 Gew.-% bezogen sind und die Komponente (B) ein wasserverdünnbares Polyesterharz ist, das eine Säurezahl von 20 bis 100, vorzugsweise 25 bis 45, eine Hydroxylzahl von 40 bis 150, vorzugsweise 50 bis 80 aufweist und herstellbar ist, indem

(i) eine organische Verbindung mit mindestens drei funktionellen Gruppen, wobei mindestens eine der funktionellen Gruppen eine Carboxylgruppe sein muß und die übrigen funktionellen Gruppen Hydroxyl- und/oder Amino- und/oder Carboxyl- und/oder Säureanhydridgruppen sein können, wobei für eine Säureanhydridgruppe zwei funktionelle Gruppen gezählt werden, oder Gemische aus solchen organischen Verbindungen

(ii) eine cyclische Dicarbonsäure oder ein Gemisch aus cyclischen Dicarbonsäuren

(iii) gegebenenfalls eine aliphatische Dicarbonsäure, oder ein Gemisch aus aliphatischen Dicarbonsäuren

(iv) ein Polyol, bei dem mindestens ein $\alpha$-C-Atom ein sekundäres oder tertiäres C-Atom oder ein Glied in einem kohlenstoffhaltigen Ringsystem ist, oder ein Gemisch aus solchen Polyolen und

(v) gegebenenfalls ein von (iv) verschiedenes Polyol, oder ein Gemisch aus solchen Polyolen

miteinander umgesetzt werden, wobei die Carbonsäurekomponente ((i) + (ii) + (iii)) und die Polyolkomponente ((iv) + (v)) in einem molaren Verhältnis von 3 : 4 bis 7 : 8 eingesetzt werden, das molare Verhältnis zwischen ((i) + (ii) und (iii) 50 : 50 bis 100 : 0, vorzugsweise 75 : 25 beträgt und das molare Verhältnis zwischen (iv) und (v) 40 : 60 bis 100 : 0, vorzugsweise 60 : 40 bis 100 : 0 beträgt und das entstandene Reaktionsprodukt wenigstens teilweise neutralisiert wird.

Die mit den erfindungsgemäßen Lacken hergestellten Füller- bzw. Steinschlagzwischengrundschichten zeichnen sich durch eine sehr gute Steinschlagbeständigkeit (insbesondere bei tiefen Temperaturen), hohe Elastizität, gute Haftung nach Schwitzwasserbelastung und gute Schleiffähigkeit aus. Die erfindungsgemäßen Lacke eignen sich außerdem überraschenderweise sehr gut zur Herstellung von Grundierungen auf Aluminium.

Die Komponente (A) kann aus (a), (b), (c) und gegebenenfalls (d) nach den dem Fachmann gut bekannten Methoden der Polyurethanchemie hergestellt werden (vgl. z.B. US-PS-4,719,132, DE-OS-36 28 124, EP-A-89 497, EP-A-256 540 und WO 87/03829). Als Komponente (a) können gesättigte und ungesättigte Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel $H(-0-(CHR^1)_n-)_mOH$, wobei $R^1$ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole, wie Poly(oxyethylen)glykole, Poly-(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich $M_n$ von 400 bis 3000. Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbonsäuren und Diole können lineare oder verzweigte aliphatische, cycloaliphatische oder aromatische Dicarbonsäuren oder Diole sein. Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel $(-CO-(CHR^2)_n-CH_2-0)$ aus. Hierbei ist n bevorzugt 4 bis 6 und der Substituent $R^2$ Wasserstoff, ein Alkyl-, Cycloalkyl- oder Alkoxy-Rest.

Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte $\epsilon$-Caprolacton, bei dem n den Wert 4 hat und alle R-Substituenten Wasserstoff sind, bevorzugt. Die Umsetzung mit Lacton wird durch niedermolekulare Polyole, wie Ethylenglykol, 1,3-Propandiol, 1,4-Butandiol, Dimethylolcyclohexan gestartet. Es können jedoch auch andere Reaktionskomponenten, wie Etyhlendiamin, Alkyldialkanolamine oder auch Harnstoff mit Caprolacton umgesetzt werden.

Als höhermolekulare Diole eignen sich auch Polylactamdiole, die durch Reaktion von beispielsweise $\epsilon$-Caprolactam mit niedermolekularen Diolen hergestellt werden.

Als Komponente (b) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele hierfür sind Isophorondiisocyanat, Cyclopentylendiisocyanat, sowie Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel

$$OCN\text{-}(CR_2^3)_r\text{-}NCO$$

worin r eine ganze Zahl von 2 bis 20, insbesondere 6 bis 8 ist und $R^3$, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethandiisocyanat.

Die Komponente (b) muß hinsichtlich der Funktionalität der Polyisocyanate so zusammengesetzt sein, daß kein vernetztes Polyurethanharz erhalten wird. Die Komponente (b) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Um die Wasserverdünnbarkeit der eingesetzten Polyurethanharze zu gewährleisten, müssen zur Anionenbildung befähigten Gruppen in die Polyurethanmoleküle eingebaut werden. Die zur Anionenbildung befähigten Gruppen sorgen nach ihrer Neutralisation dafür, daß das Polyurethanharz in Wasser stabil dispergiert werden kann. Das Polyurethanharz (A) soll eine Säurezahl von 10 bis 60, vorzugsweise 20 bis 35 aufweisen. Aus der Säurezahl kann die in die Polyurethanmoleküle einzuführende Menge an zur Anionenbildung befähigten Gruppen berechnet werden.

Die Einführung von zur Anionenbildung befähigten Gruppen in die Polyurethanmoleküle erfolgt über den Einbau von Verbindungen (c) in die Polyurethanmoleküle, die mindestens eine gegenüber Isocyanatgruppen reaktive und eine zur Anionenbildung befähige Gruppe im Molekül enthalten.

Als Komponente (c) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponenente (c) können beispielsweise Alkansäuren mit zwei Substituenten an $\alpha$-ständigen Kohlenstoffatomen eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (c) sind Dihydroxypropionsäure, Dihydroxybernsteinsäure und Dihydroxybenzoesäure. Eine besonders bevorzugte Gruppe von Alkansäuren sind die $\alpha,\alpha$Dimethylolalkansäuren der allgemeinen Formel $R^4\text{-}C(CH_2OH)_2COOH$, wobei $R^4$ für ein Wasserstoffatom oder eine Alkylgruppe mit bis zu etwa 20 Kohlenstoffatomen steht.

4

Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxyalkansäure ist 2,2-Dimethylolpropionsäure. Aminogruppenhaltige Verbindungen sind beispielsweise $\alpha,\delta$-Diaminovaleriansäure, 3,4-Diaminobenzoesäure, 2,4-Diaminotoluolsulfonsäure und 2,4-Diamino-diphenylethersulfonsäure.

Die erfindungsgemäß eingesetzten Polyurethanharze (A) können gegebenenfalls unter Mitverwendung von Hydroxyl- und/oder Aminogruppen enthaltenden organischen Verbindungen mit einem Molekulargewicht von 40 bis 400, oder einem Gemisch aus solchen Verbindungen hergestellt werden (Komponente (d) . Der Einsatz der Komponente (d) führt zur Molekulargewichtserhöhung der Polyurethanharze. Als Komponente (d) können beispielsweise Polyole mit bis zu 20 Kohlenstoffatomen je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden.

Die Polyole werden im allgemeinen in Mengen von bis zu 30 Gewichtsprozent, vorzugsweise 2 bis 20 Gewichtsprozent, bezogen auf die eingesetzte Menge an Komponenten (a) und (d) eingesetzt. Als Komponente (d) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine, wie Propylendiamin und 1-Amino-3-aminomethyl-2,5,5-trimethylcyclohexan. Es können auch Polyamine als Komponente (d) eingesetzt werden, die mehr als zwei Aminogruppen im Molekül enthalten. In diesen Fällen ist jedoch z.B. durch Mitverwendung von Monoaminen darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Die Herstellung der Komponente (A) gehört zum Stand der Technik und wird z.B. in der US-PS-4,719,132, DE-OS-3628124, EP-A-89497, EP-A-256540 und WO 87/03829 ausführlich beschrieben.

Die Komponente (B) ist ein wasserverdünnbares Polyesterharz mit einer Säurezahl von 20 bis 100, vorzugsweise 25 bis 45 und einer Hydroxylzahl von 40 bis 150, vorzugsweise 50 bis 80 und ist herstellbar, indem

(i) eine organische Verbindung mit mindestens drei funktionellen Gruppen, wobei mindestens eine der funktionellen Gruppen eine Carboxylgruppe sein muß und die übrigen funktionellen Gruppen Hydroxyl- und/oder Amino- und/oder Carboxyl- und/oder Säureanhydridgruppen sein können, wobei für eine Säureanhydridgruppe zwei funktionelle Gruppen gezählt werden oder Gemische aus solchen organischen Verbindungen

(ii)eine cyclische Dicarbonsäure oder ein Gemisch aus cyclischen Dicarbonsäuren

(iii) gegebenenfalls eine aliphatische Dicarbonsäure oder ein Gemisch aus aliphatischen Dicarbonsäuren

(iv)ein Polyol, bei dem mindestens ein $\alpha$-C-Atom ein sekundäres oder tertiäres C-Atom oder ein Glied in einem kohlenstoffhaltigen Ringsystem ist oder ein Gemisch aus solchen Polyolen und

(v) gegebenenfalls ein von (iv) verschiedenes Polyol, oder ein Gemisch aus solchen Polyolen, miteinander umgesetzt werden, wobei die Carbonsäurekomponente ((i) + (ii) + (iii)) und die Polyolkomponente ((iv) + (v)) in einem molaren Verhältnis von 3 : 4 bis 7 : 8 eingesetzt werden, das molare Verhältnis zwischen (i) + (ii) und (iii) 50 : 50 bis 100 : 0, vorzugsweise 75 : 25 beträgt und das molare Verhältnis zwischen (iv) und (v) 40 : 60 bis 100 : 0, vorzugsweise 60 : 40 bis 100 : 0 beträgt und das entstandene Reaktionsprodukt wenigstens teilweise neutralisiert wird.

Die Umsetzung der Komponenten (i), (ii), (iii), (iv) und (v) erfolgt nach allgemein gut bekannten Methoden der Polyesterchemie. Die Reaktionstemperatur sollte zweckmäßigerweise bei 140 bis 240, vorzugsweise 180 bis 220 °C liegen. In manchen Fällen kann es zweckmäßig sein, die Veresterungsreaktion zu katalysieren. Beispiele für brauchbare Katalysatoren sind Tetrabutyltitanat, Zinkoctoat, Zinnoctoat, Dibutylzinnoxid, organische Salze des Dibutylzinnoxids usw..

Die erfindungsgemäß eingesetzten Polyesterharze werden hergestellt, indem die Carbonsäurekomponente und die Polyolkomponente in einem molaren Verhältnis von 3 : 4 bis 7 : 8, die Komponenten (i) + (ii) und (iii) in einem molaren Verhältnis von 50 : 50 bis 100 : 0, vorzugsweise 75 : 25 und die Komponenten (iv) und (v) in einem molaren Verhältnis von 40 : 60 bis 100 : 0, vorzugsweise 60 : 40 bis 100 : 0 eingesetzt werden. Die Carbonsäurekomponente besteht aus den Komponenten (i), (ii) und gegebenenfalls (iii). Die Polyolkomponente besteht aus der Komponente (iv) und gegebenenfalls (v). (i) + (ii) steht für die Summe aus eingesetzter Menge an Komponente (i) und eingesetzter Menge an Komponente (ii). Analoges gilt für (i) + (ii) + (iii) und (iv) + (v).

Die Komponente (i) darf nur in solchen Mengen eingesetzt werden, daß keine gelierten Polyesterharze erhalten werden. Die Menge an einzusetzender Komponente (i) kann aus der zu erreichenden Säurezahl leicht errechnet werden, wobei postuliert wird, daß die freien Carboxylgruppen aus der Komponente (i) stammen. Die Tatsache, daß nicht alle freien Carboxylgruppen aus der Komponente (i) stammen müssen, ist bei der Berechnung der Menge an einzusetzender Komponente (i) zu ignorieren.

Als Komponente (i) können beispielsweise Polycarbonsäuren wie z.B. Tetracarbonsäuren und Tricarbonsäuren, Hydroxycarbonsäuren wie z.B. Monohydroxydicarbonsäuren und Dihydroxymonocarbonsäuren, Aminosäuren und die Anhydride dieser Säuren eingesetzt werden. Als Beispiele werden genannt: Trimesinsäure (Benzol-1,3,5-tricarbonsäure), Trimellithsäure, Pyromellithsäure, Glycerinsäure, Äpfelsäure, Dimethylolpropionsäure, Weinsäure, Zitronensäure und die Anhydride dieser Säuren. Addukte von Maleinsäureanhydrid an ungesättigte Fettsäuren und ungesättigte Harzsäuren können auch als (i) Komponente eingesetzt werden. Als Komponente (i) wird vorzugsweise Trimellithsäure, Trimellithsäureanhydrid, Pyromellithsäure oder Pyromellithsäureanhydrid eingesetzt. Als Komponente (i) können selbstverständlich auch Mischungen aus den obengenannten Säuren eingesetzt werden. Als Komponente (ii) kann prinzipiell jede cycloaliphatische oder aromatische Dicarbonsäure mit 5 bis 30, vorzugsweise 6 bis 18 Kohlenstoffatomen im Molekül oder ein Anhydrid dieser Dicarbonsäure oder ein Gemisch aus diesen Dicarbonsäuren bzw. deren Anhydriden eingesetzt werden. Als Beispiele für einsetzbare Dicarbonsäuren werden Isophthalsäure, Terephthalsäure, Orthophthalsäure, Tetrahydrophthalsäure, Hexahydrophthalsäure, 1,4 Cyclohexandicarbonsäure, Dicyclopentadiendicarbonsäure und Endomethylentetrahydrophthalsäure sowie deren Anhydride genannt. Als Komponente (ii) werden vorzugsweise Isophthalsäure, Terephthalsäure, Orthophthalsäure, Tetrahydrophthalsäure, Hexahydrophthalsäure, deren Anhydride oder Gemische aus diesen Dicarbonsäuren bzw. deren Anhydriden eingesetzt.

Als Komponente (iii) kann prinzipiell jede lineare oder verzweigte aliphatische Dicarbonsäure mit 2 bis 40 Kohlenstoffatomen im Molekül oder ein Anhydrid dieser Dicarbonsäuren oder ein Gemisch aus diesen Dicarbonsäuren bzw. deren Anhydriden eingesetzt werden. Als Beispiele für einsetzbare aliphatische Dicarbonsäuren werden Oxalsäure, Malonsäure, Bernsteinsäure, Glutarsäure, Adipinsäure, Pimelinsäure, Korksäure, Azelainsäure, Sebacinsäure, Maleinsäure, Fumarsäure und dimerisierte Fettsäuren sowie deren Anhydride genannt. Als Komponente (iii) werden vorzugsweise Adipinsäure, Azelainsäure, Sebacinsäure, Bernsteinsäure, dimerisierte Fettsäuren, deren Anhydride oder Gemische aus diesen Dicarbonsäuren bzw. deren Anhydriden eingesetzt.

Als Komponente (iv) kann prinzipiell jedes Polyol mit 4 bis 40, vorzugsweise 5 bis 12 Kohlenstoffatomen im Molekül eingesetzt werden, bei dem mindestens ein $\alpha$-C-Atom ein sekundäres oder tertiäres C-Atom oder ein Glied in einem kohlenstoffhaltigen Ringsystem ist. Es können auch Gemische solcher Polyole eingesetzt werden. Als (iv) Komponente sind beispielsweise Verbindungen einsetzbar, die mindestens ein Molekülfragment der allgemeinen Formel - $C(R^1R^2)$-$CH_2OH$ enthalten, wobei $R^1$ und $R^2$ für aliphatische, cycloaliphatische oder aromatische Kohlenwasserstoffreste mit 1 bis 20, vorzugsweise 1 bis 6 Kohlenstoffatomen stehen. Als Beispiele für solche Verbindungen werden Neopentylglykol, Trimethylolpropan, Trimethylolethan, 2-Methyl-2-propylpropandiol 1,3, 2-Ethyl-2-butylpropandiol 1,3, 2-Ethyl-2-phenylpropandiol 1,3, 2,2,4 Trimethylpentandiol 1,5, 2,2,5 Trimethylhexandiol 1,6 und Hydroxypivalinsäureneopentylglycolester genannt. Als Beispiel für eine Verbindung in der mindestens ein $\alpha$-C-Atom Glied in einem kohlenstoffhaltigen Ringsystem ist wird Dimethylolcyclohexan genannt. Als Komponente (iv) werden vorzugsweise Neopentylglykol, Hydroxypivalinsäureneopentylglykolester, Dimethylolcyclohexan und 2-Ethyl-2-butylpropandiol 1,3 eingesetzt.

Als Komponente (v) können prinzipiell alle von (iv) verschiedenen Polyole mit 2 bis 40 Kohlenstoffatomen im Molekül, sowie Mischungen solcher Polyole eingesetzt werden. Als Beispiele für geeignete Polyole werden Ethylenglykol, Propylenglykol, Butylenglykol, Butandiol 1,4, Hexandiol 1,6, Diethylenglykol und Dipropylenglykol genannt.

Zur Neutralisation der Komponenten (A) und (B) können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin, eingesetzt werden. Für die Neutralisation werden leicht flüchtige Amine bevorzugt.

Die Komponente (C) ist ein Aminoplastharz. Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Als Komponente (C) werden vorzugsweise wasserverdünnbare Aminoplastharze, insbesondere wasserverdünnbare Melamin-Formaldehydharze eingesetzt.

Die erfindungsgemäßen Lacke können neben der erfindungsgemäßen Kombination aus (A), (B) und (C) alle beliebigen in der Lacktechnologie an sich bekannten Hilfs- und Zusatzmittel, wie organische Lösemittel, Pigmente, Füllstoffe, Verlaufshilfsmittel usw., enthalten. Der Fachmann kann mit Hilfe der erfindungsgemäßen Kombination aus (A), (B) und (C) mit Hilfe seines Fachwissens problemlos wäßrige Einbrennlacke formulieren, die als Steinschlagzwischengrund und/oder als Füller eingesetzt werden können. Mit Hilfe der erfindungsgemäßen Kombination aus (A), (B) und (C) können aber auch wäßrige Lacke hergestellt werden, die für andere Anwendungszwecke geeignet sind.

Die erfindungsgemäßen Lacke können nach an sich bekannten Methoden, beispielsweise durch Spritzen, Streichen, Tauchen, Fluten, Rakeln oder Walzen auf beliebige Substrate, wie z.B. Metalle, Kunststoffe, Holz oder Glas, appliziert werden. Die zu lackierenden Substrate können mit geeigneten Grundierungen versehen sein.

Die Erfindung wird in den folgenden Beispielen näher erläutert. Alle Angaben über Teile und Prozentsätze sind Gewichtsangaben, falls nicht ausdrücklich etwas anderes festgestellt wird.

## 1. Herstellung erfindungsgemäß eingesetzter Polyurethanharze

### 1.1 Polyurethandispersion I

796 g eines hydroxylterminierten Polyesters (Säurezahl 5 mg KOH/g) auf Basis Neopentylglykol (1,00 mol), Hexandiol-1,6 (1,89 mol) und Adipinsäure (1,93 mol) werden zusammen mit 113,9 g Dimethylolpropionsäure, 742,5 g 4,4'-Diisocyanatodicyclohexylmethan und 1101,8 g Methylethylketon unter Rühren auf 82 °C erhitzt. Bei einem NCO-Gehalt, bezogen auf Reaktionsmischung von 1,44 %, werden 76,0 g Trimethylolpropan zugegeben. Diese Reaktionslösung wird so lange bei 82 °C gehalten, bis ein NCO-Gehalt von 0,0 % erreicht ist oder die Viskosität (Platte/Kegel-Viskosimeter) einer Probe (1 : 1 verdünnt mit N-Methylpyrrolidon) größer als 11 dPas ist. Zur Beseitigung eventuell vorhandener Rest-NCO-Gruppen wird nach Zugabe von 12 g Ethanol eine Stunde bei 82 °C gehalten. Anschließend versetzt man mit 66,1 g Dimethylethanolamin und dispergiert in 3555 g deionisiertem Wasser. Nach dem Entfernen des Methylethylketons durch Vakuumdestillation wird mit 138,3 g Butyldiglykol versetzt und filtriert. Die resultierende feinteilige Dispersion weist einen nichtflüchtigen Anteil von 30 % und einen pH-Wert von 7.5 auf.

### 1.2 Polyurethandispersion II

Analog der Vorschrift zur Herstellung der Polyurethandispersion I werden folgende Komponenten eingesetzt: 1250 g eines Polyesters (Säurezahl 5 mg KOH/g) auf Basis Adipinsäure (1,00 mol), Tetrahydrophthalsäureanhydrid (1,00 mol), Hexandiol-1,6 (1,08 mol) und Neopentylglykol (1,30 mol), 140,4 g Dimethylolpropionsäure, 55,5 g Neopentylglykol, 547,0 g 2,4-Toluylendiisocyanat/2,6-Toluylendiisocyanat (80 : 20), 1.330 g Methylethylketon, 105,0 g Trimethylolpropan (bei einem NCO-Gehalt von 1,33 %, bezogen auf Reaktionslösung), 14,4 g Ethanol, 82,5 g Dimethylethanolamin, 4.895,1 g deionisiertes Wasser und 167,8 g Butyldiglykol. Die resultierende Polyurethandispersion weist nach dem Entfernen des Methylethylketons einen nichtflüchtigen Anteil von 30 % und einen pH-Wert von 7,6 auf.

### 1.3 Polyurethandispersion III

Analog der Vorschrift zur Herstellung der Polyurethandispersion I werden folgende Komponenten eingesetzt: 541,4 g eines Polyesters (Säurezahl 3,5 mg KOH/g) auf Basis einer polymeren technischen Fettsäure (Dimerengehalt mindestens 98 Gew.-%, Trimerengehalt höchstens 2%-Gew.) (1,00 mol), Isophthalsäure (1,01 mol) und Hexandiol-1,6 (2,64 mol), 44,2 g Dimethylolpropionsäure, 7,2 g Neopentylglykol, 202,8 g Isophorondiisocyanat, 399,4 g Methylethylketon, 24,9 g Trimethylolpropan (bei einem NCO-Gehalt von 1,10 % bezogen auf Reaktionslösung), 5,7 g Ethanol, 24,6 g Dimethylethanolamin, 1.914,5 g deionisiertes Wasser und 65,6 g Butyldiglykol. Es resultiert eine Polyurethandispersion mit einem nichtflüchtigen Anteil von 30 % und einem pH-Wert von 8.0.

1.4 Polyurethandispersion IV

Analog der Vorschrift zur Herstellung der Polyurethandispersion I werden folgende Komponenten eingesetzt: 1.210,9 g Polyester (siehe Beispiel Polyurethandispersion I), 195,3 g Dimethylolpropionsäure, 1.145,4 g 4,4'-Diisocyanato-dicyclohexylmethan, 1700 g Methylethylketon. Anstelle von Trimethylolpropan werden bei einem NCO-Gehalt von 1,44 %, bezogen auf Reaktionsgemisch, 403 g Methylethylketon und 1.705,4 g eines Polyesters (Säurezahl 30,5 mg KOH/g) auf Basis von Neopentylglykol (1,25 mol), Hexandiol-1,6 (1,00 mol), Trimethylolpropan (2,25 mol), Tetrahydrophthalsäure (2,50 mol) und Adipinsäure (1,75 mol) zugegeben. Sobald keine freien NCO-Gruppen mehr nachweisbar sind, wird mit 170,0 g Dimethylethanolamin neutralisiert, in 9.933,0 g deionisiertem Wasser dispergiert, im Vakuum das Methylethylketon abdestilliert und mit 340,6 g Butyldiglykol versetzt.
Die feinteilige Dispersion hat einen nichtflüchtigen Anteil von 30 % und einen pH-Wert von 8,0.

2. Herstellung erfindungsgemäß eingesetzter Polyesterharze

2.1 Polyesterharz I

In einen 2 1 Reaktionsbehälter mit indirekter Beheizung über einen Ölumlaufthermostat, ausgestattet mit einem Ankerrührer und einem Rührmotor mit einem Stufengetriebe, einer Füllkörperkolonne, einem Kondensator und einer Destillatvorlage und Temperaturmessung im Reaktor und am Kolonnenkopf werden 290,6 g Dipropylenglykol, 236,0 g 2,2-Dimethylpropandiol-1,3 und 415,4 g Isophthalsäure eingewogen und schnell auf 170°C aufgeheizt. Die Temperatur wird dann innerhalb von 7 Stunden auf 220°C so gesteigert, daß die Kolonnenkopftemperatur 103°C nicht übersteigt. Es wird dann bei 220°C verestert bis eine Säurezahl von 10,3 und eine Viskosität (gemessen im ICI-Platte/Kegel-Viskosimeter bei 23°C an einer Lösung des Polyesters 60 %ig in 2-Butoxyethanol) von 125 mPa.s erreicht sind. Es wird dann auf 150°C abgekühlt und 160,1 g Trimellithsäureanhydrid zugegeben und wieder vorsichtig auf 180°C aufgeheizt. Es wird verestert bis zu einer Säurezahl von 54,3 und einer Viskosität (gemessen im ICI-Platte/Kegel-Viskosimeter bei 23°C an einer Lösung des Polyesters 50 %ig in 2-Butoxyethanol) von 185 mPa.s. Es wird dann stark abgekühlt und unter 140°C mit 111,1 g 2-Butoxyethanol angelöst und mit 68,9 g 2-(N,N-Dimethylamino)-ethanol teilneutralisiert und weiter auf 90°C gekühlt. Die Lösung wird dann in ein Rührgefäß abgelassen und mit vier Portionen deionisiertem Wasser auf einen Gehalt an nichtflüchtiger Substanz (gemessen an einer Probe von ca. 1 g und einer Abdunstung von 60 min. bei 130°C in einem Umlufttrockenschrank) von 40,0 % verdünnt. Es resultiert eine kolloidale Lösung mit 0,65 meq an Base, berechnet auf 100 g Substanz.

2.2 Polyesterharz II

In der oben beschriebenen Apparatur werden eingewogen 498,0 g 2,2-Dimethylpropandiol-1,3, 203,0 g Tetrahydrophthalsäureanhydrid und 181,0 g Isophthalsäure. Es wird verfahren wie bei der Herstellung von Polyesterharz I und verestert auf eine Säurezahl von 17,7 und eine Viskosität (gemessen im ICI-Platte/Kegel-Viskosimeter bei 23°C an einer Lösung des Polyesters 60 %ig in 2-Butoxyethanol) von 115 mPa.s. Es wird abgekühlt wie bei der Herstellung von Polyesterharz I und es werden 228,0 g Trimellithsäureanhydrid zugegeben, erneut aufgeheizt und verestert bis zu einer Säurezahl von 57,3 und einer Viskosität (gemessen im ICI-Platte/Kegel-Viskosimeter bei 23°C an einer Lösung des Polyesters 60 %ig in 2-Butoxyethanol) von 1760 mPa.s. Es wird mit 120 g 2-Butoxyethanol angelöst, wie bei der Herstellung des Polyesterharzes I mit 55,0 g 2-(N,N-Dimethylamino)-ethanol neutralisiert und mit deionisiertem Wasser und weiterem 2-(N,N-Dimethylamino)-ethanol auf einen pH-Wert von 7,20 und einen Gehalt an nichtflüchtiger Substanz von 40,0 % eingestellt.

2.3 Polyesterharz III

Es wird verfahren wie bei der Herstellung des Polyesterharzes I. Für die erste Reaktionsstufe werden eingewogen: 203,9 g 2,2-Dimethylpropandiol-1,3 und 400,0 g eines Esters aus 2,2-Dimethylpropandiol-1,3 und 2,2-Dimethyl-3-hydroxipropionsäure und 325,5 g Isophthalsäure.
Es wird auf eine Säurezahl von 13,3 und eine Viskosität (gemessen im ICIPlatte/Kegel-Viskosimeter bei 23° an einer Lösung des Polyesters 60 %ig in 2-Butoxyethanol) von 110 mPa.s gekocht. Die Zugabe von Trimellithsäureanhydrid beträgt 161,4 g. Es wird in der zweiten Reaktionsstufe verestert auf eine Säurezahl von 32,6 und eine Viskosität (gemessen im ICI-Platte/KegelViskosimeter bei 23°C an einer Lösung des Polyesters 50 %ig in 2-Butoxyethanol) von 250 mPa.s. Es wird abgekühlt und mit 2-(2-Butoxy-ethoxy)-ethanol auf einen Anteil an nichtflüchtiger Substanz von 85,0 % angelöst, dann werden mit 2-(N,N-Dimethylamino)-ethanol 80 % der aus der Säurezahl zu berechnenden Carboxylgruppen neutralisiert und schließlich wird, wie oben beschrieben, mit Wasser auf einen Gehalt an nichtflüchtiger Substanz von 40,0 % verdünnt.

## 3. Herstellung erfindungsgemäßer Lacke

Gemäß den in Tabelle 1 angegebenen Gewichtsteilen werden die oben beschriebenen wäßrigen Polyesterdispersionen mit entionisiertem Wasser, mit einer Lösung eines handelsüblichen Antischaummittels auf Basis eines ungesättigten verzweigten Diols, gelöst in Ethylenglykol, sowie N,N-Dimethylethanolamin versetzt und mit nachbehandeltem Titandioxid vom Rutiltyp und handelsüblichem, feinteiligen Bariumsulfat, oberflächenbehandeltem Talkum und einem handelsüblichen Flammruß angepastet. Diese Mischungen werden in eine diskontinuierliche Laborsandmühle gefüllt und dispergiert, bis eine Feinheit von max. 12 μm im Grindometer nach Hegmann erreicht ist. Aus den Dispergiermischungen werden dann unter Zusatz der oben beschriebenen Polyurethandispersionen, niedrig molekularem, mit Methanol hochverethertem Melaminharz, einem handelsüblichen Verlaufsmittel auf Basis eines wasserverdünnbaren Acrylatharzes, Glykolethern und weiterem deionisiertem Wasser nach allgemein bekannten Methoden die erfindungsgemäßen Lacke 1 bis 7 erhalten (vgl. Tabelle 1).

Tabelle 1

| Lack | 1 | 2 | 3 | 4 | 5 | 6 | 7 |
|---|---|---|---|---|---|---|---|
| Polyester I | 17,5 | 17,5 | 17,5 | 17,5 | - | - | 17,5 |
| Polyester II | - | - | - | - | 17,5 | - | - |
| Polyester III | - | - | - | - | - | 17,5 | - |
| deionisiertes Wasser | 4,5 | 4,5 | 4,5 | 4,5 | 4,5 | 4,5 | 3,5 |
| N,N,-Dimethylethanolamin | 0,1 | 0,1 | 0,1 | 0,1 | 0,1 | 0,1 | 0,1 |
| Titandioxid | 12,0 | 12,0 | 12,0 | 12,0 | 12,0 | 12,0 | 12,0 |
| Bariumsulfat | 12,0 | 12,0 | 12,0 | 12,0 | 12,0 | 12,0 | 12,0 |
| Talkum 1,3 | 1,3 | 1,3 | 1,3 | 1,3 | 1,3 | 1,3 | |
| Flammruß 0,1 | 0,1 | 0,1 | 0,1 | 0,1 | 0,1 | 0,1 | |
| Antischaummittel | 0,2 | 0,2 | 0,2 | 0,2 | 0,2 | 0,2 | 0,2 |
| Dispergiermischung | 47,7 | 47,7 | 47,7 | 47,7 | 47,7 | 47,7 | 46,7 |
| Polyurethandispersion I | 46,7 | - | - | - | 46,7 | 46,7 | 46,7 |
| Polyurethandispersion II | - | 46,7 | - | - | - | - | - |
| Polyurethandispersion III | - | - | 46,7 | - | - | - | - |
| Polyurethandispersion IV | - | - | - | 46,7 | - | - | - |
| Melaminharz (Cymel 301)®[1] | 3,0 | 3,0 | 3,0 | 3,0 | 3,0 | 3,0 | 3,8 |
| Butyldiglykol | 1,6 | 1,6 | 1,6 | 1,6 | 1,6 | 1,6 | - |
| Butylglykol | - | - | - | - | - | - | 1,8 |
| Verlaufsmittel | 0,6 | 0,6 | 0,6 | 0,6 | 0,6 | 0,6 | 0,6 |
| deionisiertes Wasser | 0,4 | 0,4 | 0,4 | 0,4 | 0,4 | 0,4 | 0,4 |
| | 100,0 | 100,0 | 100,0 | 100,0 | 100,0 | 100,0 | 100,0 |

[1]Handelsprodukt der American Cyanamid Company

## 4. Applikation der erfindungsgemäßen Lacke als Füller

Die Lacke 1 bis 6 wurden mit deionisiertem Wasser auf eine Viskosität von 25 s, gemessen im Auslaufbecher nach DIN 4 bei 20°C, eingestellt und mit einer Fließbecherpistole (Düsenöffnung 1,2 mm; Luftdruck 4,5 bar) in zwei Kreuzgängen mit 1 Minute Zwischenablüftzeit auf mit einem Elektrotauchlack gemäß Beispiel 6 der DE-OS-2701002 beschichtete phosphatierte Stahlbleche gespritzt. Die Applikation erfolgte bei einer Lufttemperatur von 23°C und einer relativen Luftfeuchte von 60 %. Die gespritzten Tafeln wurden 10 min bei 23°C und anschließend 10 min. bei 80°C in einem Umluftofen abgelüftet und dann 20 min bei 160°C in einem Umluftofen eingebrannt, abgekühlt und beurteilt. Die erhaltenen Lackierungen zeigten einen sehr guten Verlauf, deckten die Struktur der Elektrotauchlackierung sehr gut ab und zeigten eine gute Zwischenhaftung zur Elektrotauchlackgrundierung. Die Lacke wurden auch elektrostatisch appliziert. Dabei wurde hier mit einer Esta-Behr-Anlage mit einer Glocke TOS 300/5/8, einem Abstand von 30 cm und einer Drehzahl von 30000 Umdrehungen pro Minute bei einer relativen Luftfeuchte von 40 - 70 % gearbeitet.

Nach dem Abkühlen wurden die Tafeln dann zusätzlich mit einem lösungsmittelhaltigen weißen Einbrenndecklack auf Basis eines Alkydharzes mit gesättigten und ungesättigten Fettsäuren (Säurezahl 12, OH-Zahl 110) in Kombination mit einem mittelmolekularen, teilweise mit n-Butanol veretherten Melaminharz (Verhältnis 2 : 1), pigmentiert mit einem nachbehandelten Titandioxid vom Rutiltyp (PVK 21 %) und mit Lösungsmitteln und Additiven, die üblicherweise für die Verarbeitung eines Lackes für die Automobilserienlackierung eingesetzt werden, überspritzt und 30 min bei 130°C eingebrannt (Trockenfilmdicke 40 $\mu$m).

Die Überzüge zeichnen sich durch guten Verlauf, gute Abdeckung der Struktur der Grundierung und gute Zwischenhaftung aus.

Weitere Daten und Prüfergebnisse sind in Tabelle 2 zu finden.

Tabelle 2

| Lack | 1 | 2 | 3 | 4 | 5 | 6 |
|---|---|---|---|---|---|---|
| Schichtdicke Füller ($\mu$m) | 35 | 35 | 35 | 35 | 35 | 35 |
| Gitterschnitt nach DIN 53151 (Gt B) | 0-1 | 0-1 | 0-1 | 0 | 1 | 0-1 |
| VDA Steinschlag * 1000 g/2 bar | 2 | 3 | 3 | 3 | 1 | 2 |
| Multischlagsprüfung mit Moränensplitt ** | 1 | 2 | 2 | 1 | 1 | 2 |
| Einzelschlagprüfung nach DIN 55995 bei -23°C [mm²/Rostgrad] | 3/RO | 2/RO | 4/RO | 2/RO | 4/RO | 3/RO |

* Der Steinschlagtest wurde mit einem VDA-Steinschlagprüfgerät (Modell 508) durchgeführt (innerhalb von 20 s einmaliger Beschuß mit 1000 g Stahlschrot; Druck 2 bar). Die Bewertungsskala reicht von 1 (sehr gut) bis 10 (sehr schlecht).

** Die Prüfung wurde mit dem Mercedes Benz Multischlaggerät durchgeführt. Beschuß mit 300 g Moränensplitt, Körnung 5-8 mm, Luftdruck 0,5 bar, Rohrdurchmesser 20 mm, Beschußabstand 200 mm, Beschußdauer 10 Sekunden. Die Bewertungsskala reicht von 0 (sehr gut) bis 5 (sehr schlecht).

Lack 7 wurde wie die Lacke 1 bis 6 eingestellt, appliziert und eingebrannt. Als Substrat wurde eine Aluminiumtafel (AL 99) eingesetzt. Anschließend wurde mit einem handelsüblichen weißen Polyesterpulverlack, der mit Titandioxid pigmentiert war, überlackiert und 20 min bei 180°C eingebrannt (Schichtdicke 100 $\mu$m). Die Tafel wurde einem 500 Stunden Schwitzwasser- und Temperaturwechseltest unterzogen (84 Zyklen à 6 h im Klimaschrank wie folgt: 1 h heizen von 23 auf 40°C, 1 h 40°C, 4 h absenken auf 23°C. Relative Luftfeuchte immer 100 %). Nach dieser Belastung war keine Blasenbildung zu beobachten und die Gitterschnittprüfung ergab den Kennwert Gt 0 (DIN 53151 Gt B).

**Patentansprüche**

**1.** Verfahren zur Lackierung von Fahrzeugkarosserien, bei dem
(1) ein Elektrotauchlack appliziert und eingebrannt wird
(2) gegebenenfalls ein Steinschlagzwischengrund appliziert und separat oder zusammen mit der in Stufe (3) aufgebrachten Füllerschicht eingebrannt wird
(3) ein Füller appliziert und eingebrannt wird und
(4) eine ein- oder mehrschichtige Decklackierung appliziert und eingebrannt wird,
wobei als Steinschlagzwischengrund und/oder Füller ein wäßriger Einbrennlack eingesetzt wird, der als Bindemittel eine Kombination aus
(A) einem wasserverdünnbaren Polyurethanharz
(B) einem wasserverdünnbaren Polyesterharz und
(C) einem Aminoplastharz
enthält, wobei die Komponente (A) eine Säurezahl von 10 bis 60 und ein zahlenmittleres Molekularge-

EP 0 517 707 B1

wicht von 4000 bis 25.000 aufweist und herstellbar ist, indem

(a) ein Polyester- und/oder Polyetherpolyol mit einem zahlenmittleren Molekulargewicht von 400 bis 5000 oder ein Gemisch aus solchen Polyester- und/oder Polyetherpolyolen

(b) ein Polyisocyanat, oder ein Gemisch aus Polyisocyanaten

(c) eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und gegebenenfalls

(d) eine Hydroxyl- und/oder Aminogruppen enthaltende organische Verbindung mit einem Molekulargewicht von 40 bis 400, oder ein Gemisch aus solchen Verbindungen

miteinander umgesetzt werden und das entstandene Reaktionsprodukt wenigstens teilweise neutralisiert wird, dadurch gekennzeichnet, daß die Komponente (A) in einer Menge von 40 bis 70 Gew.-%, die Komponente (B) in einer Menge von 15 bis 40 Gew.-% und die Komponente (C) in einer Menge von 8 bis 35 Gew.-% eingesetzt werden, wobei die Gewichtsprozentangaben auf (A) + (B) + (G) = 100 Gew.-% bezogen sind und die Komponente (B) ein wasserverdünnbares Polyesterharz ist, das eine Säurezahl von 20 bis 100, vorzugsweise 25 bis 45, eine Hydroxylzahl von 40 bis 150, vorzugsweise 50 bis 80 aufweist und herstellbar ist, indem

(i) eine organische Verbindung mit mindestens drei funktionellen Gruppen, wobei mindestens eine der funktionellen Gruppen eine Carboxylgruppe sein muß und die übrigen funktionellen Gruppen Hydroxyl- und/oder Amino- und/oder Carboxyl- und/oder Säureanhydridgruppen sein können, wobei für eine Säureanhydridgruppe zwei funktionelle Gruppen gezählt werden, oder Gemische aus solchen organischen Verbindungen

(ii) eine cyclische Dicarbonsäure oder ein Gemisch aus cyclischen Dicarbonsäuren

(iii) gegebenenfalls eine aliphatische Dicarbonsäure oder ein Gemisch aus aliphatischen Dicarbonsäuren

(iv) ein Polyol bei dem mindestens ein $\alpha$-C-Atom ein sekundäres oder tertiäres C-Atom oder ein Glied in einem kohlenstoffhaltigen Ringsystem ist, oder ein Gemisch aus solchen Polyolen und

(v) gegebenenfalls ein von (iv) verschiedenes Polyol, oder ein Gemisch aus solchen Polyolen,

miteinander umgesetzt werden, wobei die Carbonsäurekomponente ((i) + (ii) + (iii)) und die Polyolkomponente ((iv) + (v)) in einem molaren Verhältnis von 3 : 4 bis 7 : 8 eingesetzt werden, das molare Verhältnis zwischen (i) + (ii) und (iii) 50 : 50 bis 100 : 0, vorzugsweise 75 : 25 beträgt und das molare Verhältnis zwischen (iv) und (v) 40 : 60 bis 100 : 0, vorzugsweise 60 : 40 bis 100 : 0 beträgt und das entstandene Reaktionsprodukt wenigstens teilweise neutralisiert wird.

2. Wäßrige Lacke, die als Bindemittel eine Kombination aus

(A) einem wasserverdünnbaren Polyurethanharz

(B) einem wasserverdünnbaren Polyesterharz und

(C) einem Aminoplastharz

enthalten, wobei die Komponente (A) eine Säurezahl von von 10 bis 60 und ein zahlenmittleres Molekulargewicht von 4000 bis 25.000 aufweist und herstellbar ist, indem

(a) ein Polyester- und/oder Polyetherpolyol mit einem zahlenmittleren Molekulargewicht von 400 bis 5000 oder ein Gemisch aus solchen Polyester- und/oder Polyetherpolyolen

(b) ein Polyisocyanat oder einem Gemisch aus Polyisocyanaten

(c) eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und gegebenenfalls

(d) eine Hydroxyl- und/oder Aminogruppen enthaltende organische Verbindung mit einem Molekulargewicht von 40 bis 400, oder ein Gemisch aus solchen Verbindungen

miteinander umgesetzt werden und das entstandene Reaktionsprodukt wenigstens teilweise neutralisiert wird, dadurch gekennzeichnet, daß die Komponente (A) in einer Menge von 40 bis 70 Gew.-%, die Komponente (B) in einer Menge von 15 bis 40 Gew.-% und die Komponente (C) in einer Menge von 8 bis 35 Gew.-% eingesetzt werden, wobei die Gewichtsprozentangaben auf (A) + (B) + (C) = 100 Gew.-% bezogen sind und die Komponente (B) ein wasserverdünnbares Polyesterharz ist, das eine Säurezahl von 20 bis 100, vorzugsweise 25 bis 45, eine Hydroxylzahl von 40 bis 150, vorzugsweise 50 bis 80 aufweist und herstellbar ist, indem

(i) eine organische Verbindung mit mindestens drei funktionellen Gruppen, wobei mindestens eine der funktionellen Gruppen eine Carboxylgruppe sein muß und die übrigen funktionellen Gruppen Hydroxyl- und/oder Amino- und/oder Carboxyl- und/oder Säureanhydridgruppen sein können, wobei für eine Säureanhydridgruppe zwei funktionelle Gruppen gezählt werden, oder Gemische aus solchen organischen Verbindungen

(ii) eine cyclische Dicarbonsäure oder ein Gemisch aus cyclischen Dicarbonsäuren

(iii)gegebenenfalls eine aliphatische Dicarbonsäure oder ein Gemisch aus aliphatischen Dicarbonsäuren

(iv) ein Polyol, bei dem mindestens ein α-C-Atom ein sekundäres oder tertiäres C-Atom oder ein Glied In einem kohlenstoffhaltigen Ringsystem ist, oder ein Gemisch aus solchen Polyolen und

(v) gegebenenfalls ein von (iv) verschiedenes Polyol oder ein Gemisch aus solchen Polyolen

miteinander umgesetzt werden, wobei die Carbonsäurekomponente ((i) + (ii) + (iii)) und die Polyolkomponente ((iv) + (v)) in einem molaren Verhältnis von 3 : 4 bis 7 : 8 eingesetzt werden, das molare Verhältnis zwischen (i) + (ii) und (iii) 50 : 50 bis 100 : 0, vorzugsweise 75 : 25 beträgt und das molare Verhältnis zwischen (iv) und (v) 40 : 60 bis 100 : 0, vorzugsweise 60 : 40 bis 100 : 0 beträgt und das entstandene Reaktionsprodukt wenigstens teilweise neutralisiert wird.

3. Verfahren oder Lacke nach Anspruch 1 oder 2, dadurch gekennzeichnet, daß (A) zu 50 bis 65 Gew.-%, (B) zu 20 bis 35 Gew.-% und (C) zu 10 bis 25 Gew.-% vorliegt.

4. Verfahren oder Lacke nach einem der Ansprüche 1 bis 3, dadurch gekennzeichnet, daß die Komponente (A) eine Säurezahl von 20 bis 35 und ein zahlenmittleres Molekulargewicht von 8000 bis 15000 aufweist.

5. Verfahren oder Lacke nach einem der Ansprüche 1 bis 4, dadurch gekennzeichnet, daß als Komponente (i) Trimellithsäure, Trimellithsäureanhydrid, Pyromellithsäure oder Pyromellithsäureanhydrid eingesetzt wird.

6. Verfahren oder Lacke nach einem der Ansprüche 1 bis 5, dadurch gekennzeichnet, daß als Komponente (ii) Phthalsäure, Isophthalsäure, Terephthalsäure, Tetrahydrophthalsäure, Hexahydrophthalsäure oder deren Anhydride eingesetzt werden.

7. Verfahren oder Lacke nach einem der Ansprüche 1 bis 6, dadurch gekennzeichnet, daß als Komponente (iii) Adipinsäure, Azelainsäure, Sebacinsäure oder deren Anhydride eingesetzt werden.

8. Verfahren oder Lacke nach einem der Ansprüche 1 bis 6, dadurch gekennzeichnet, daß als Komponente (iv) Neopentylglykol, 2-Ethyl-2-Butylpropandiol-1,3 oder Hydroxypivalinsäureneopentylglykolester eingesetzt wird.

**Claims**

1. Process for coating vehicle bodies, in which

(1) an electro-dipping primer is applied and baked

(2) if appropriate a stone-chip intermediate primer is applied and is baked separately or together with the filler coat applied in stage (3)

(3) a filler is applied and baked and

(4) a single- or multi-layer top coating is applied and baked,

in which the stone-chip intermediate primer and/or filler employed is an aqueous stoving enamel containing as the binder a combination of

(A) a water-dilutable polyurethane resin,

(B) a water-dilutable polyester resin and

(C) an aminoplast resin,

in which component (A) has an acid number from 10 to 60 and a number-average molecular weight of 4000 to 25,000 and can be prepared by reacting

(a) a polyester- and/or polyether-polyol having a number-average molecular weight of 400 to 5000, or a mixture of such polyester- and/or polyether-polyols,

(b) a polyisocyanate, or a mixture of polyisocyanates,

(c) a compound which contains in the molecule at least one group which is reactive towards isocyanate groups and at least one group which is capable of anion formation, or a mixture of such compounds, and if appropriate

(d) an organic compound which contains hydroxyl and/or amino groups and has a molecular weight of 40 to 400, or a mixture of such compounds,

12

with one another and at least partly neutralizing the reaction product formed, characterized in that component (A) is employed in an amount of 40 to 70% by weight, component (B) in an amount of 15 to 40% by weight and component (C) in an amount of 8 to 35% by weight, in which the percentage by weight data are based on (A) + (B) + (C) = 100% by weight, and component (B) is a water-dilutable polyester resin which has an acid number of 20 to 100, preferably 25 to 45, and a hydroxyl number of 40 to 150, preferably 50 to 80, and can be prepared by reacting

(i) an organic compound containing at least three functional groups, in which at least one of the functional groups must be a carboxyl group and the other functional groups can be hydroxyl and/or amino and/or carboxyl and/or acid anhydride groups, an acid anhydride group being counted as two functional groups, or mixtures of such organic compounds,

(ii) a cyclic dicarboxylic acid, or a mixture of cyclic dicarboxylic acids,

(iii) if appropriate an aliphatic dicarboxylic acid, or a mixture of aliphatic dicarboxylic acids,

(iv) a polyol in which at least one $\alpha$-C atom is a secondary or tertiary C atom or a member in a carbon-containing ring system, or a mixture of such polyols, and

(v) if appropriate a polyol other than (iv), or a mixture of such polyols,

with one another, the carboxylic acid components ((i) + (ii) + (iii)) and the polyol components ((iv) + (v)) being employed in a molar ratio of 3 : 4 to 7 : 8, the molar ratio between (i) + (ii) and (iii) being 50 : 50 to 100 : 0, preferably 75 : 25, and the molar ratio between (iv) and (v) being 40 : 60 to 100 : 0, preferably 60 : 40 to 100 : 0, and at least partly neutralizing the reaction product formed.

2. Aaqueous coating, which contains as the binder a combination of

(A) a water-dilutable polyurethane resin,

(B) a water-dilutable polyester resin and

(C) an aminoplast resin,

in which component (A) has an acid number from 10 to 60 and a number-average molecular weight of 4000 to 25,000 and can be prepared by reacting

(a) a polyester- and/or polyether-polyol having a number-average molecular weight of 400 to 5000, or a mixture of such polyester- and/or polyether-polyols,

(b) a polyisocyanate, or a mixture of polyisocyanates,

(c) a compound which contains in the molecule at least one group which is reactive towards isocyanate groups and at least one group which is capable of anion formation, or a mixture of such compounds, and if appropriate

(d) an organic compound which contains hydroxyl and/or amino groups and has a molecular weight of 40 to 400, or a mixture of such compounds,

with one another and at least partly neutralizing the reaction product formed, characterized in that component (A) is employed in an amount of 40 to 70% by weight, component (B) in an amount of 15 to 40% by weight and component (C) in an amount of 8 to 35% by weight, in which the percentage by weight data are based on (A) + (B) + (C) = 100% by weight, and component (B) is a water-dilutable polyester resin which has an acid number of 20 to 100, preferably 25 to 45, and a hydroxyl number of 40 to 150, preferably 50 to 80, and can be prepared by reacting

(i) an organic compound containing at least three functional groups, in which at least one of the functional groups must be a carboxyl group and the other functional groups can be hydroxyl and/or amino and/or carboxyl and/or acid anhydride groups, an acid anhydride group being counted as two functional groups, or mixtures of such organic compounds,

(ii) a cyclic dicarboxylic acid, or a mixture of cyclic dicarboxylic acids,

(iii) if appropriate an aliphatic dicarboxylic acid, or a mixture of aliphatic dicarboxylic acids,

(iv) a polyol in which at least one $\alpha$-C atom is a secondary or tertiary C atom or a member in a carbon-containing ring system, or a mixture of such polyols, and

(v) if appropriate a polyol other than (iv), or a mixture of such polyols,

with one another, the carboxylic acid components ((i) + (ii) + (iii)) and the polyol components ((iv) + (v)) being employed in a molar ratio of 3 : 4 to 7: 8, the molar ratio between (i) + (ii) and (iii) being 50 : 50 to 100 : 0, preferably 75 : 25, and the molar ratio between (iv) and (v) being 40 : 60 to 100 : 0, preferably 60 : 40 to 100 : 0, and at least partly neutralizing the reaction product formed.

3. Process or coating according to Claim 1 or 2, characterized in that (A) is present to the extent of 50 to 65% by weight, (B) to the extent of 20 to 35% by weight and (C) to the extent of 10 to 25% by weight.

**4.** Process or coating according to any one of Claims 1 to 3, characterized in that component (A) has an acid number of 20 to 35 and a number-average molecular weight of 8000 to 15,000.

**5.** Process or coating according to any one of Claims 1 to 4, characterized in that trimellitic acid, trimellitic anhydride, pyromellitic acid or pyromellitic anhydride is employed as component (i).

**6.** Process or coating according to any one of Claims 1 to 5, characterized in that phthalic acid, isophthalic acid, terephthalic acid, tetrahydrophthalic acid, hexahydrophthalic acid or anhydrides thereof are employed as component (ii).

**7.** Process or coating according to any one of Claims 1 to 6, characterized in that adipic acid, azelaic acid, sebacic acid or anhydrides thereof are employed as component (iii).

**8.** Process or coating according to any one of Claims 1 to 6, characterized in that neopentylglycol, 2-ethyl-2-butylpropane-1,3-diol or neopentylglycol hydroxypivalate is employed as component (iv).

**Revendications**

**1.** Procédé de peinture de carrosseries de véhicules, en particulier automobiles, dans lequel
(1) un vernis électrophorétique est appliqué puis cuit
(2) le cas échéant une couche antigravillonnage est appliquée puis cuite séparément ou avec la couche d'apprêt appliquée à l'étape (3)
(3) un apprêt est appliqué et cuit
(4) un vernis de finition à une ou plusieurs couches est appliqué et cuit,
où on utilise en tant que couche antigravillonnage et/ou d'apprêt une laque thermodurcissable aqueuse qui contient en tant que liant un mélange constitué de
(A) une résine polyuréthane diluable à l'eau
(B) une résine polyester diluable à l'eau et
(C) une résine aminoplaste, où le composant (A) présente un indice d'acide de 10 à 60 et un poids moléculaire moyen en nombre de 4000 à 25.000 et peut être produit en faisant réagir les uns avec les autres
(a) un polyol de polyester et/ou de polyéther ayant un poids moléculaire moyen en nombre de 400 à 5000 ou un mélange de polyols de polyesters et/ou de polyéthers de ce type
(b) un polyisocyanate ou un mélange de polyisocyanates
(c) un composé qui présente dans sa structure au moins un groupe susceptible de réagir avec des groupes isocyanate et au moins un groupe capable de former des anions, ou un mélange de composés de ce type et le cas échéant
(d) un composé organique contenant des groupes hydroxy et/ou amino ayant un poids moléculaire de 40 à 400 ou un mélange de composés de ce type
et le produit réactionnel qui en résulte est au moins en partie neutralisé et caractérisé en ce que le composant (A) est utilisé dans une proportion de 40 à 70 % en poids, le composant (B) dans une proportion de 15 à 40 % en poids et le composant (C) dans une proportion de 8 à 35 % en poids, auquel cas les données de pourcentages en poids se rapportent à (A) + (B) + (C) = 100 % en poids et le composant (B) est une résine polyester diluable à l'eau qui présente un indice d'acide de 20 à 100, de préférence de 25 à 45, un indice d'hydroxyle de 40 à 150, de préférence de 50 à 80 et peut être produit en faisant réagir les uns avec les autres
(i) un composé organique ayant au moins trois groupes fonctionnels, où au moins l'un des groupes fonctionnels doit être un groupe carboxy et les autres groupes fonctionnels peuvent être des groupes hydroxy et/ou amino et/ou carboxy et/ou anhydride d'acide, où l'on compte deux groupes fonctionnels pour un groupe anhydride d'acide, ou des mélanges de composés organiques de ce type
(ii) un acide dicarboxylique cyclique ou un mélange d'acides dicarboxyliques cycliques
(iii) le cas échéant un acide dicarboxylique aliphatique ou un mélange d'acides dicarboxyliques aliphatiques
(iv) un polyol dans lequel au moins un atome de carbone en position $\alpha$ est un atome de carbone secondaire ou tertiaire ou un élément d'un système cyclique carboné, ou un mélange de polyols de ce type et

14

(v) le cas échéant un polyol différent de (iv) ou un mélange de polyols de ce type,

où les composants acide carboxylique ((i) + (ii) + (iii)) et les composants polyol ((iv) + (v)) sont utilisés dans un rapport molaire allant de 3 : 4 à 7 : 8, où le rapport molaire entre (i) + (ii) et (iii) est de 50 : 50 à 100 : 0, de préférence 75 : 25 et le rapport molaire entre (iv) et (v) est de 40 : 60 à 100 : 0, de préférence 60 : 40 à 100 : 0 et où le produit réactionnel résultant est au moins en partie neutralisé.

2. Laque aqueuse qui contient en tant que liant un mélange constitué de
   (A) une résine polyuréthane diluable à l'eau
   (B) une résine polyester diluable à l'eau et
   (C) une résine aminoplaste, où le composant (A) présente un indice d'acide de 10 à 60 et un poids moléculaire moyen en nombre de 4000 à 25.000 et peut être produit en faisant réagir les uns avec les autres
   
   (a) un polyol de polyester et/ou de polyéther ayant un poids moléculaire moyen en nombre de 400 à 5000 ou un mélange de polyols de polyesters et/ou de polyéthers de ce type
   (b) un polyisocyanate ou un mélange de polyisocyanates
   (c) un composé qui présente dans sa structure au moins un groupe susceptible de réagir avec des groupes isocyanate et au moins un groupe capable de former des anions, ou un mélange de composés de ce type et le cas échéant
   (d) un composé organique contenant des groupes hydroxy et/ou amino ayant un poids moléculaire de 40 à 400 ou un mélange de composés de ce type
   
   et le produit réactionnel qui en résulte est au moins en partie neutralisé, caractérisée en ce que le composant (A) est utilisé dans une proportion de 40 à 70 % en poids, le composant (B) dans une proportion de 15 à 40 % en poids et le composant (C) dans une proportion de 8 à 35 % en poids, auquel cas les données de pourcentages en poids se rapportent à (A) + (B) + (C) = 100 % en poids et le composant (B) est une résine polyester diluable à l'eau qui présente un indice d'acide de 20 à 100, de préférence de 25 à 45, un indice d'hydroxyle de 40 à 150, de préférence de 50 à 80 et peut être produit en faisant réagir les uns avec les autres
   
   (i) un composé organique ayant au moins trois groupes fonctionnels, où au moins l'un des groupes fonctionnels doit être un groupe carboxy et les autres groupes fonctionnels peuvent être des groupes hydroxy et/ou amino et/ou carboxy et/ou anhydride d'acide, où l'on compte deux groupes fonctionnels pour un groupe anhydride d'acide, ou des mélanges de composés organiques de ce type
   (ii) un acide dicarboxylique cyclique ou un mélange d'acides dicarboxyliques cycliques
   (iii) le cas échéant un acide dicarboxylique aliphatique ou un mélange d'acides dicarboxyliques aliphatiques
   (iv) un polyol dans lequel au moins un atome de carbone en position $\alpha$ est un atome de carbone secondaire ou tertiaire ou un élément d'un système cyclique carboné, ou un mélange de polyols de ce type et
   (v) le cas échéant un polyol différent de (iv) ou un mélange de polyols de ce type,
   
   où les composants acide carboxylique ((i) + (ii) + (iii)) et les composants polyols ((iv) + (v)) sont utilisés dans un rapport molaire allant de 3 : 4 à 7 : 8, où le rapport molaire entre (i) + (ii) et (iii) est de 50 : 50 à 100 : 0, de préférence 75 : 25 et le rapport molaire entre (iv) et (v) est de 40 : 60 à 100 : 0, de préférence 60 : 40 à 100 : 0 et où le produit réactionnel résultant est au moins en partie neutralisé.

3. Procédé ou laque selon la revendication 1 ou 2, caractérisé en ce que (A) présente de 50 à 65 % en poids, (B) de 20 à 35 % en poids et (C) de 10 à 25 % en poids.

4. Procédé ou laque selon l'une quelconque des revendications 1 à 3, caractérisé en ce que le composant (A) a un indice d'acide de 20 à 35 et un poids moléculaire moyen en nombre de 8000 à 15000.

5. Procédé ou laque selon l'une quelconque des revendications 1 à 4, caractérisé en ce qu'on utilise, en tant que composant (i) l'acide trimellitique, l'anhydride trimellitique, l'acide pyromellitique ou l'anhydride pyromellitique.

6. Procédé ou laque selon l'une quelconque des revendications 1 à 5, caractérisé en ce qu'on utilise, en tant que composant (ii) l'acide phtalique, l'acide isophtalique, l'acide téréphtalique, l'acide tétrahydrophtalique, l'acide hexahydrophtalique ou leurs anhydrides.

7. Procédé ou laque selon l'une quelconque des revendications 1 à 6, caractérisé en ce qu'on utilise, en tant que composant (iii) l'acide adipique, l'acide azélaïque, l'acide sébacique ou leurs anhydrides.

8. Procédé ou laque selon l'une quelconque des revendications 1 à 6, caractérisé en ce qu'on utilise, en tant que composant (iv), le néopentyl glycol, le 2-éthyl-2-butylpropane-1,3-diol ou l'ester de néopentyl glycol de l'acide hydroxypivalique.